Europäisches Patentamt

European Patent Office

Office européen des brevets

(11) Numéro de publication: **0 376 760**

**A1**

## (12) DEMANDE DE BREVET EUROPEEN

(21) Numéro de dépôt: **89401427.3**

(51) Int. Cl.5: **H05B 6/12**

(22) Date de dépôt: **25.05.89**

(30) Priorité: **27.12.88 FR 8817214**

(43) Date de publication de la demande:
**04.07.90 Bulletin 90/27**

(84) Etats contractants désignés:
**AT BE CH DE ES FR GB GR IT LI LU NL SE**

(71) Demandeur: **BONNET S.A.**
**Rue de l'Ecossais, Limas**
**F-69650 Villefranche-sur-Saone(FR)**

(72) Inventeur: **Maklouf, Brahim**
**21, avenue Félix Faure**
**F-69003 Lyon(FR)**
Inventeur: **Pelletier, Daniel**
**658, rue Nationale**
**F-69400 Villefranche sur Saone(FR)**

(74) Mandataire: **Tony-Durand, Serge**
**Cabinet Tony-Durand 77, rue Boissière**
**F-75116 Paris(FR)**

(54) **Plaque de cuisson par chauffage par induction.**

(57) Cette plaque de cuisson comporte au moins deux éléments inducteurs distincts (1 et 2) disposés concentriquement l'un autour de l'autre. Ceux-ci sont branchés en parallèle aux bornes d'un onduleur unique (7) d'alimentation

Ainsi, lorsqu'un récipient de grand diamètre est placé sur cette plaque les deux inducteurs (1 et 2) sont en service. Par contre lorsqu'il s'agit d'un récipient dont le diamètre correspond à celui de l'inducteur central, seul celui-ci participe à la production de courants induits dans ce récipient, de sorte que l'inducteur externe est traversé par une faible quantité de courant.

EP 0 376 760 A1

FIG. 1

## Plaque de cuisson par chauffage par induction

La présente invention concerne les plaques de cuisson assurant un chauffage par induction.

Les plaques de ce genre comportent une bobine d'induction alimentée par l'intermédiaire d'un onduleur avec un courant à haute fréquence, par exemple 20 à 35 kHZ. Cette bobine, de forme relativement plate, est disposée sous une plaque en vitrocéramique ou autre matériau approprié susceptible d'être traversé par le champ magnétique produit. Ainsi, des courants induits prennent naissance dans tout récipient en métal ferritique placé sur une telle plaque de cuisson. Ces courants ont donc pour effet d'échauffer ce récipient et lui seul, ce qui est un avantage important par rapport aux plaques de cuisson par conduction thermique.

Cependant pour obtenir une puissance maximale, il convient que le diamètre du récipient soit à peu près le même que celui de la plaque de cuisson. En effet lorsque le diamètre du récipient est nettement plus important que celui de la surface de cuisson, le chauffage par induction est imparfait car toute la zone annulaire située à l'extérieur de cette surface se trouve en dehors du champ magnétique produit par la bobine d'induction. Lorsque le récipient présente un diamètre nettement inférieur à celui de la surface de chauffe, la zone annulaire externe de l'inducteur est alimentée inutilement en courant électrique car elle ne participe pas à la production de courants induits ayant pour effet d'échauffer ce récipient. Là encore le chauffage du récipient par induction est donc imparfait. Par ailleurs, le fait que dans un tel cas la zone annulaire externe de l'inducteur soit parcourue par le courant électrique sans qu'une charge (récipient) soit disposée en regard, a pour inconvénient que cette zone génère des perturbations radio-électriques.

Compte tenu de la situation exposée ci-dessus, les appareils de cuisson assurant un chauffage par induction comportent en général plusieurs surfaces distinctes de chauffage par induction qui correspondent à des diamètres différents de récipient. Cependant il s'agit là d'une solution imparfaite et coûteuse.

C'est pourquoi la présente invention a pour objet une plaque de chauffage par induction qui est conçue de façon à pouvoir recevoir des récipients de diamètres nettement différents, et ce sans que l'on rencontre les inconvénients exposés précédemment.

A cet effet cette plaque est caractérisée en ce qu'elle comporte au moins deux éléments inducteurs distincts disposés concentriquement l'un autour de l'autre, et qui sont branchés en parallèle aux bornes d'un onduleur unique d'alimentation.

Ainsi, lorsque l'on place sur cette plaque un récipient de grand diamètre correspondant à celui de l'inducteur externe, le courant se répartit entre les deux inducteurs qui participent l'un et l'autre à la production de courants induits dans le matériau de ce récipient. Par contre, si l'on met en place un récipient de moindre diamètre correspondant à celui de l'inducteur central, seul celui-ci comporte une charge en regard. En conséquence il s'établit automatiquement une adaptation du dispositif au cas considéré, c'est-à-dire que le premier inducteur reçoit la presque totalité du courant. Seule une faible quantité de courant parcourt l'inducteur externe, ce qui évite les inconvénients exposés précédemment.

En conséquence, la présente plaque de cuisson peut être utilisée pour le chauffage de récipients de diamètres nettement différents, et ce en assurant à chaque fois des conditions optimum de fonctionnement. Mais bien entendu il pourrait être prévu plus de deux éléments inducteurs concentriques, par exemple trois ou plus.

Cependant d'autres particularités et avantages de la plaque de cuisson selon l'invention apparaitront au cours de la description suivante de quelques exemples de réalisation de celle-ci. Cette description est donnée en référence aux dessins annexés à simple titre indicatif, et sur lesquels :

La figure 1 est une vue schématique en coupe verticale d'une plaque de cuisson selon l'invention sur laquelle est disposée un récipient de faible diamètre,

La figure 2 est une vue schématique en plan de dessus des deux inducteurs prévus dans cette plaque.

Les figures 3 et 4 représentent deux schémas électriques différents de branchement des inducteurs d'une telle plaque.

La figure 5 représente un autre schéma encore de branchement des deux inducteurs d'une plaque de cuisson selon l'invention.

La figure 6 illustre une autre forme de réalisation particulière du branchement des deux inducteurs d'une telle plaque.

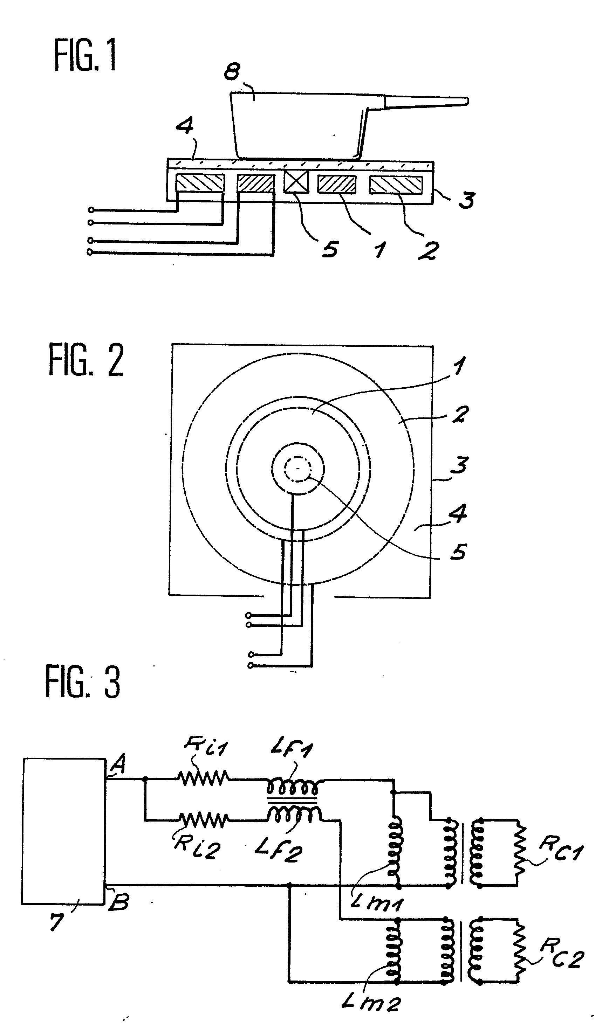

Les figures 1 et 2 représentent une plaque de cuisson comprenant deux inducteurs concentriques 1 et 2 disposés l'un autour de l'autre, à l'intérieur d'un même boîtier 3. Ces inducteurs peuvent avoir un contour de forme circulaire ou autre, par exemple un contour ovale, carré, elliptique, etc. Le boîtier 3 est fermé sur le dessus par une plaque 4 en vitrocéramique ou autre matériau approprié susceptible d'être traversé par un champ magnétique, et qui est destinée à servir de support au récipient à chauffer. Chaque inducteur est constitué par une bobine formée de multiples brins en cuivre afin de limiter l'effet de peau. En son centre, l'inducteur central 1 comporte un espace libre à l'intérieur duquel est disposé, de façon connue, une sonde thermique 5.

Ces deux inducteurs sont branchés en parallèle sur les bornes de sortie A et B de l'onduleur 7 assurant l'alimentation de l'ensemble. Sur ce circuit Ri1 et Ri2 représentant la résistance propre de chacun des deux circuits, Lf1 et Lf2 représentent la self de fuite de chacun d'eux, tandis que Lm1 et Lm2 sont les selfs magnétisantes de l'un et l'autre. Quant aux résistances Rc1 et Rc2, elles représentent les pièces ferriques à l'intérieur desquelles sont générés des courants induits.

En effet lorsqu'un récipient de grand diamètre est disposé sur cette surface, sa partie centrale est disposée en regard de l'inducteur 1 et correspond donc à Rc1, cependant que sa partie annulaire périphérique est située en regard de l'inducteur externe 2 pour correspondre à Rc2. Dans un tel cas le courant provenant de l'onduleur 7 se répartit entre les deux inducteurs qui participent alors tous deux à la production de courants induits dans les parties correspondantes du récipient.

Par contre, dans le cas illustré à la figure 1 le diamètre du récipient 8 à chauffer est plus faible et correspond à peu près au diamètre de l'inducteur central 1. En conséquence seul cet inducteur comporte une charge Rc1 à l'intérieur de laquelle est généré un courant induit. Dans ces conditions il se produit une adaptation automatique de la plaque de cuisson à ce cas particulier en ce sens que l'inducteur 1 est alors traversé par la quasi totalité du courant provenant de l'onduleur 7 et que l'inducteur 2 ne l'est que par une très faible quantité de courant. Ceci évite donc les inconvénients rencontrés antérieurement lors du chauffage d'un récipient de faible diamètre au moyen d'un inducteur de plus grand diamètre.

Cependant le montage en parallèle de plusieurs inducteurs a pour avantage qu'avec ces inducteurs en service on a néanmoins toujours une self compatible avec les valeurs admises avec un générateur. Par ailleurs, en jouant sur le nombre respectif de spires des deux inducteurs, on peut obtenir une puissance disponible importante dans l'inducteur central 1 par rapport à l'autre dans le cas où l'on dispose un récipient de diamètre réduit sur la plaque de cuisson. En effet on peut faire varier le rapport

$$\frac{Lf1 + Lm1}{Lf2 + Lm2}$$

en jouant sur le nombre de spires des deux inducteurs et/ou sur leurs dimensions.

Grâce à la conception de la présente plaque de cuisson, on peut faire varier la puissance reçue par un récipient en éloignant celui-ci de l'axe des inducteurs. Par ailleurs, en jouant sur les caractéristiques de self des différents inducteurs concentriques, en l'occurrence sur le nombre de spires, il est possible d'obtenir une valeur décroissante de la puissance en fonction de la distance, et ce depuis le centre vers l'extérieur. La variation de puissance peut alors correspondre à une droite ou une courbe de profil déterminé.

Ainsi qu'il a déjà été indiqué, la présente plaque de cuisson peut comporter trois inducteurs concentriques distincts, ou même plus, tous ces inducteurs étant alors branchés en parallèle sur le circuit d'alimentation de l'ensemble. Bien entendu lorsqu'il est prévu trois inducteurs distincts la plaque de cuisson peut alors fonctionner dans des conditions optimum pour des récipients présentant trois diamètres différents. En effet le principal avantage des plaques de cuisson selon l'invention réside dans le fait que les conditions de chauffage par induction s'adaptent en quelque sorte automatiquement aux différents diamètres des récipients mis en place sur ces plaques. Il s'agit là d'un avantage important par rapport aux plaques actuelles de chauffage par induction.

Bien entendu il est possible de regrouper plusieurs plaques de chauffe selon l'invention sur une même plaque générale de cuisson. Les différentes surfaces de chauffage peuvent alors comporter des diamètres égaux ou différents.

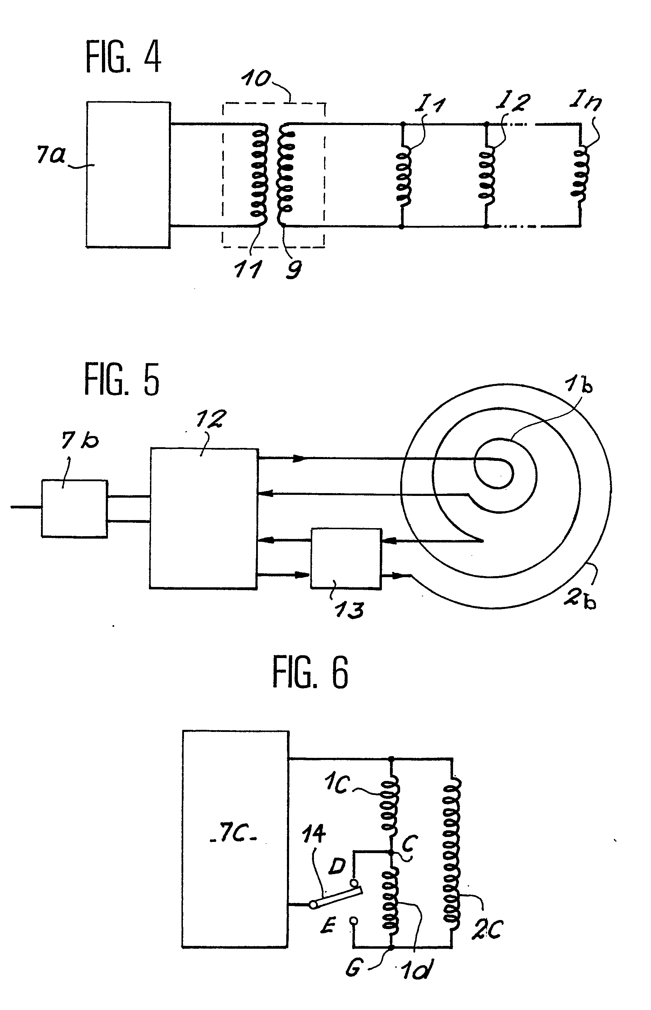

La figure 4 représente un autre schéma de branchement des différents inducteurs concentriques I1, I2,... In d'une plaque de cuisson selon l'invention. Dans ce cas ces différents inducteurs sont alimentés en parallèle par le secondaire 9 d'un transformateur 10 dont le primaire 11 est alimenté par un onduleur unique 7a. Ainsi cet onduleur voit toujours la même impédance.

La figure 5 représente une autre forme de réalisation d'une plaque de chauffage par induction selon l'invention. Celle-ci comprend deux inducteurs concentriques 1b et 2b qui sont branchés en parallèle sur les bornes de sortie d'un onduleur unique 7b d'alimentation. Toutefois, ce branchement est réalisé par l'intermédiaire d'un adaptateur d'impédance 12. Par ailleurs, l'inducteur externe 2b est monté sur cet adaptateur avec interposition d'un déphaseur 13 branché en série.

L'adaptateur d'impédance 12 est destiné à permettre d'adapter l'impédance de l'inducteur externe 2b à celle de l'inducteur central 1b. Quant au déphaseur 13, il assure un déphasage entre les courants traversant les deux inducteurs. Ceci permet de diminuer d'une façon significative le champ électro-magnétique parasite. En effet grâce à l'adaptateur 12, il est possible de procéder à un réglage précis du champ de compensation créé par l'inducteur externe 2b.

La figure 6 représente une autre forme de réalisation d'une plaque de cuisson selon l'invention. Celle-ci comporte deux inducteurs concentriques branchés en parallèle aux bornes d'un onduleur unique 7c d'alimentation. Toutefois, l'inducteur central est lui-même subdivisé en deux parties concentriques 1c et 1d alors que l'inducteur externe 2c est d'un seul tenant. Il est par ailleurs prévu un commutateur 14 disposé entre deux bornes D et E. La première d'entre elles est raccordée au point de jonction C des deux parties 1c et 1d de l'inducteur central. Quant à l'autre borne E, elle est raccordée à un point de jonction G entre l'inducteur externe 2c et la partie 1d de l'inducteur central.

Grâce à cet agencement, il est possible de faire fonctionner la présente plaque de cuisson de deux façons différentes, à savoir :

### 1°- Commutateur placé sur la borne D :

Dans ce cas, la partie 1c de l'inducteur central est branchée en direct sur la source d'alimentation, cependant que les enroulements 1d et 2c, eux-mêmes en série, sont en parallèle avec cette partie. En conséquence, le système de chauffage par induction alors constitué est très dynamique en son milieu.

### 2°- Commutateur placé sur la borne E :

Dans ce cas, l'enroulement externe 2c est branché en direct sur la source d'alimentation. Quant aux enroulements 1c et 1d ils sont alors branchés en série l'un avec l'autre et l'ensemble ainsi constitué est branché en parallèle avec l'enroulement externe 2c. En conséquence, le système est alors très dynamique à sa périphérie.

Dans ces conditions, il est donc possible de régler différemment la plaque de cuisson de la figure 6 soit pour avoir un effet très dynamique au milieu soit au contraire pour avoir un tel effet à la périphérie.

## Revendications

1. Plaque de cuisson par chauffage par induction dont l'élément inducteur est alimenté au moyen d'un onduleur, caractérisée en ce qu'il est prévu au moins deux éléments inducteurs distincts (1 et 2) disposés concentriquement l'un autour de l'autre, et qui sont branchés en parallèle aux bornes de sorties d'un onduleur unique (7) d'alimentation.

2. Plaque de cuisson selon la revendication 1, caractérisée en ce que le nombre de spires des inducteurs concentriques (1, 2) et leurs dimensions sont déterminées de façon à obtenir une puissance disponible importante sur l'inducteur central (1) lorsqu'un récipient de diamètre réduit est disposé sur la plaque de cuisson.

3. Plaque de cuisson selon la revendication 1 ou 2, caractérisée en ce que les différents inducteurs concentriques (I1, I2, ... In) de celle-ci sont alimentés en parallèle par le secondaire (9) d'un transformateur (10) dont le primaire (11) est lui-même alimenté par un onduleur unique (7a).

4. Plaque de cuisson selon l'une des revendications précédentes, caractérisée en ce que celle-ci comporte deux inducteurs concentriques (1b, 2b) branchés en parallèle sur les bornes de sortie d'un onduleur unique (7b) d'alimentation, par l'intermédiaire d'un adaptateur d'impédance (12) permettant d'adapter l'impédance de l'un des inducteurs par rapport à celle de l'autre, un déphaseur (13) branché en série avec l'inducteur externe (2b) permettant de déphaser les courants parcourant les deux inducteurs.

5. Plaque de cuisson selon l'une des revendications 1 à 3, caractérisée en ce que celle-ci comporte deux inducteurs concentriques branchés en parallèles sur les bornes d'un onduleur unique (7c) d'alimentation, et l'inducteur central est subdivisé en deux parties (1c et 1d), un commutateur (14) étant prévu pour brancher la seconde partie (1d) :
- soit en série avec la première partie (1d),
- soit en série avec l'inducteur externe (2c).

FIG. 1

FIG. 2

FIG. 3

## FIG. 4

## FIG. 5

## FIG. 6

# RAPPORT DE RECHERCHE EUROPEENNE

Office européen des brevets

Numero de la demande

EP 89 40 1427

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-A-3217850 (BOSCH-SIEMENS) <br> * le document en entier * <br> --- | 1, 2 | H05B6/12 |
| X | US-A-3275784 (MERRET) <br> * colonne 1, ligne 23 - colonne 2, ligne 29; figures 1, 2 * <br> --- | 1, 2 | |
| A | DE-A-2535223 (SACHS) <br> --- | | |
| A | EP-A-188980 (CABLECO) <br> * abrégé; figure 3 * <br> --- | 1, 4 | |
| A | FR-A-2206644 (MATSUSHITA) <br> * figures 8, 14 * <br> --- | 1, 3 | |
| A | CH-A-592997 (MITSUBISHI) <br> * colonne 2, ligne 57 - colonne 2, ligne 67; figure 5 * <br> ----- | 4 | |

**DOMAINES TECHNIQUES RECHERCHES (Int. Cl.5 )**

H05B

Le présent rapport a été établi pour toutes les revendications

| Lieu de la recherche | Date d'achèvement de la recherche | Examinateur |
|---|---|---|
| LA HAYE | 01 MARS 1990 | SPEISER P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)